# EUROPEAN PATENT APPLICATION

(11) **EP 4 484 136 A1**
(43) Date of publication of application: **01.01.2025**
(21) Application number: 24183355.7
(22) Date of filing: 20.06.2024
(51) Int. Cl.: B29C 65/20, B29C 65/78, F16L 47/02, B29L 23/00, B29K 101/12, B29K 23/00

(54) **WELDING MACHINE**

(30) Priority: 26.06.2023 IT 202300013128
(71) Applicant: RITMO S.p.A., 35037 Teolo (Padova) (IT)
(72) Inventor: BORTOLI, RENZO, 35036 MONTEGROTTO TERME (PADOVA) (IT); APOLINARI, ALESSANDRO, 35030 CERVARESE SANTA CROCE (Padova) (IT)
(74) Representative: Forattini, Amelia

(57) **Abstract**

A welding machine, comprising a base supporting an alignment and fastening device; the alignment and fastening device has guiding means, a first clamp unit and a second clamp unit, respectively engaging a first tubular element and a second tubular element to be joined by welding; at least one of the first clamp unit and said second clamp unit move with respect to each other, from a distant position to a close welding position; the base is associated with a heating device for welding the first and second tubular elements; the aligning and fastening device is an autonomous component and is mechanically connected and disconnected to/from the base; the aligning and fastening device is switched from a first operational configuration, in which the aligning and fastening device is interconnected to the welding machine, to a second operational configuration, in which the aligning and fastening device is used as a stand-alone device.

## Description

The present invention relates to a welding machine particularly for polyfusion pocket welding.

As is well known, polyfusion welders are tools used to join pipes and fittings made of thermoplastic materials, such as polypropylene (PP) and high-density polyethylene (HDPE), using the fusion welding process.

This type of welding is commonly used for the installation of pipes and ducts where a secure and durable joint of the tubular elements is required.

The machines are adapted to heat the welding surfaces of tubes and fittings up to a specific temperature; once the desired temperature is reached, the tubular elements are brought together and fused, typically using devices that guarantee coaxiality, and then left to cool.

Polyfusion welders vary in size and functionality but are generally distinguishable into two main types: stationary welders, generally called 'benchtop welders', and so-called 'portable welders'.

The benchtop welder is generally used when there is a need to weld portions of a prefabricated plant for later installation on site.

A state of the art machine has a robust base on which there are elements that facilitate the welding process, such as a support for the heating element, depth stop devices for the heating and welding phase, supports for the elements to be welded, and more.

On the other hand, the portable welding machine is used when there is a need to carry out on-site welding in particularly difficult conditions, such as welding on ceilings, welding near edges and/or walls, welding near other pipelines that have already been installed, and in all those conditions in which the use of bench welding machines would be impossible.

WO2008092810A1 discloses a trailer for carrying a welding unit for butt-welding pipe portions.

EP1700685A2 discloses portable welder for plastics pipes and pipe fittings of the type for socket welding.

There are no welding machines known in current technology that can meet all of the above requirements at the same time; in practice, two different products must currently be used according to specific needs.

The aim of the present invention is to provide a welding machine that overcomes the limitations of the prior art machines.

Within the scope of this object, an aim of the invention is to provide a welding machine that satisfactorily combines the advantages of using a benchtop welder with those of using a portable welding machine.

A further object of the invention is to provide a welding machine that achieves the above-mentioned result in a practical and relatively inexpensive manner.

A further object of the present invention is to provide a welding machine which, due to its special design features, is able to ensure the broadest guarantees of reliability and safety in use.

These objects, and others which will better apparent hereinafter, are achieved by a welding machine as claimed in the appended claims.

Further characteristics and advantages will become better apparent hereinafter from the description of a preferred, but not exclusive, embodiment of a welding machine according to the invention, illustrated by way of non-limiting example in the accompanying drawings wherein:

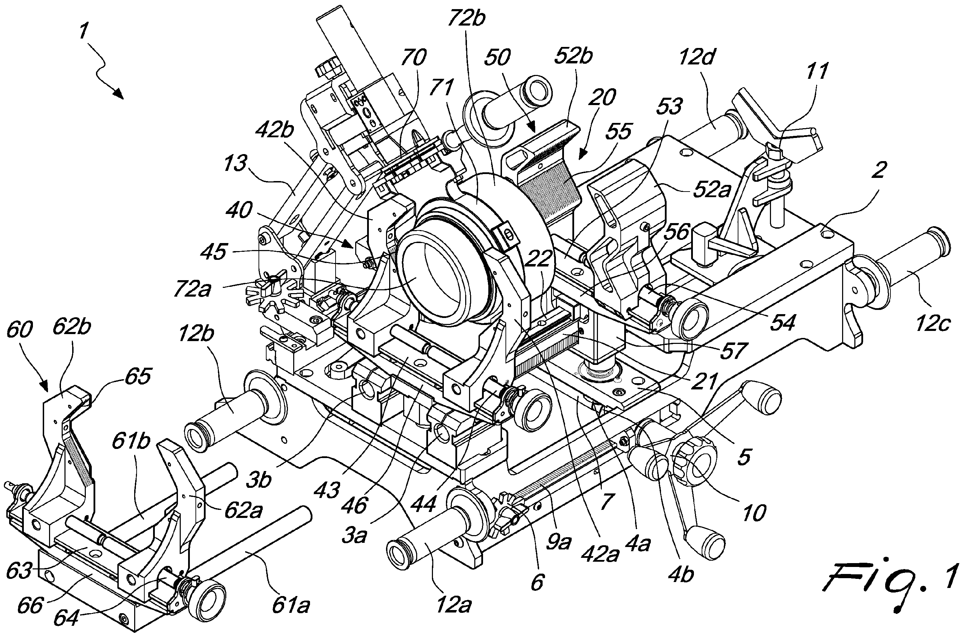

Figure 1 is a perspective view of the welding machine according to the present invention;

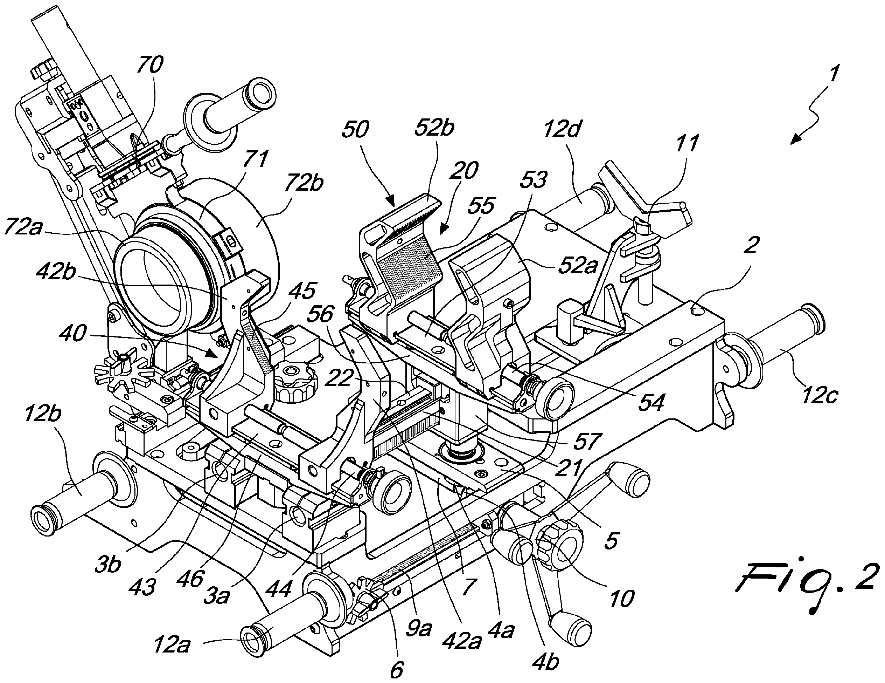

Figure 2 is a perspective view of part of the machine;
Figure 3 is a side view of part of the machine, illustrated during use;
Figure 4 is another side view of part of the machine, illustrated during use;

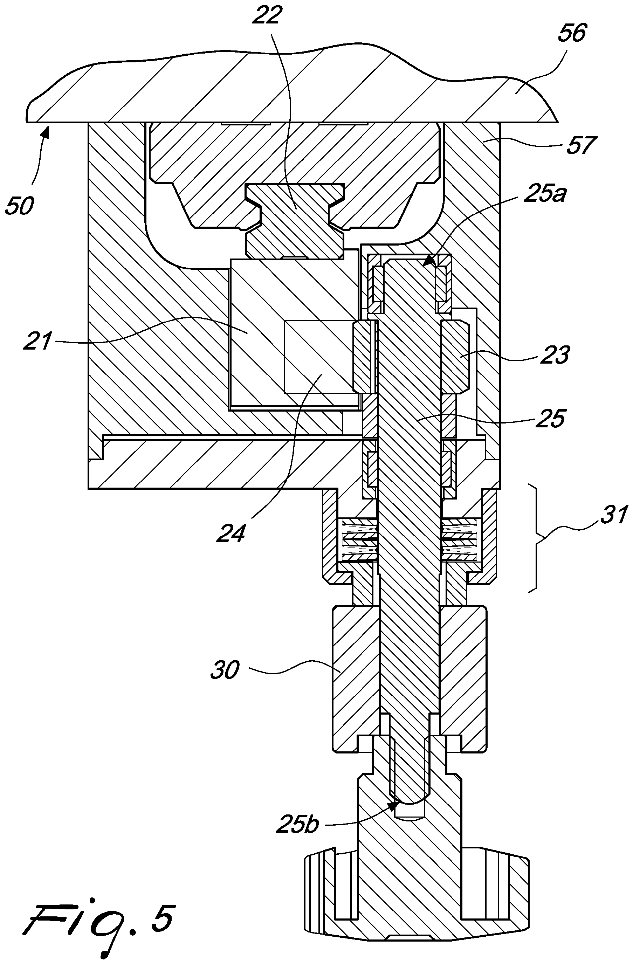

Figure 5 is a sectional view of a machine component;
Figure 6 is a cross-sectional side view of part of the machine, illustrated in an initial operational configuration;
Figure 7 is a cross-sectional side view of part of the machine, illustrated in a second operating configuration;

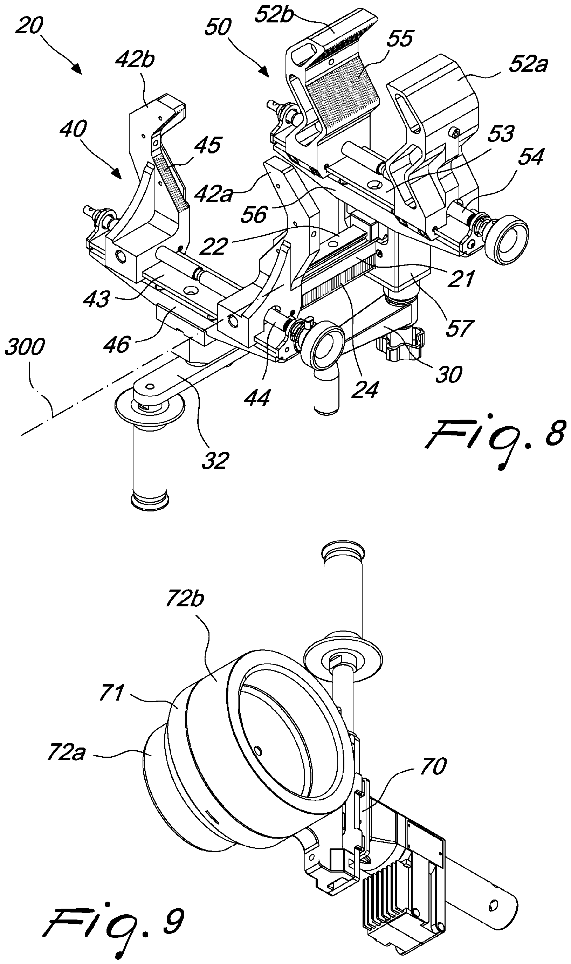

Figure 8 is a perspective view of a machine alignment and fastening device;
Figure 9 is a perspective view of a machine heating device.

With reference to the figures, the welding machine according to the invention, generally designated by the reference number 1, comprises a base 2 supporting an alignment and fastening device 20.

The fastening device 20 comprises guiding means including an elongated body 21 which supports a first clamp unit 40 and a second clamp unit 50.

The first clamp unit 40 engages a first tubular element 100, for example an elbow fitting, as exemplified in the figures.

The second clamp unit 50 engages a second tubular element 200, for example a tube to be joined to the elbow fitting by welding.

Advantageously, the machine 1 also includes an auxiliary clamp unit 60 that can be detachably attached to the base 2, preferably by means of pins 61a, 61b that can be inserted into respective holes 3a, 3b provided on the same base 2.

Specifically, the first clamp unit 40, the second clamp unit 50 and the auxiliary clamp unit 60 comprise a first pair of jaws 42a, 42b carried by a first base 43, a second pair of jaws 52a, 52b carried by a second base 53 and a third pair of jaws 62a, 62b carried by a third base 63, respectively.

Advantageously, the first, second and third bases 43, 53, 63 are removably connected to a first, second and third base 46, 56, 66, respectively.

The jaws 42a, 42b, 52a, 52b, 62a, 62b of each clamp unit 40, 50, 60 are opposed to each other and are movable with respect to each other by means of control means 44, 54, 64, that may be of a per se known type.

The jaws 42a, 42b, 52a, 52b, 62a, 62b include ridges 45, 55, 65, or knurls, on at least part of their inner surface, in order to improve grip on the tubular elements 100, 200.

The pairs of jaws 42a and 42b, 52a and 52b, 62a and 62b, together with the corresponding base 43, 53, 63, are interchangeable with each other or with other jaws having different dimensions and/or characteristics and are reversible; i.e., each pair of jaws 42a and 42b, 52a and 52b, 62a and 62b can be rotated by 180°, together with the corresponding base 43, 53, 63, with respect to a median plane of the base plate 46, 56, 66 on which it is mounted, which plane is orthogonal to a direction 300 of longitudinal development of the elongated body 21.

The second clamp unit 50 is slidingly engaged with a rail 22 mechanically coupled to the extended body 21. The second clamp unit 50 is movable along the direction 300 between a distant position from the first clamp unit 40, which is permanently fixed to the extended body 21, and a welding position, close to the first clamp unit 40.

As will be apparent to the person skilled in the art, according to further embodiments of the invention, not illustrated in the drawings, the first clamp unit 40 is movable and the second clamp unit 50 is fixed, or both clamp units 40, 50 are movable along the direction 300.

The second clamp unit 50 is moved by handling means comprising a first pinion 23 engaged with a first rack 24 mechanically associated with the elongated body 21.

The first pinion 23 is, at least in rotation, engaged to a first end 25a of a first shaft 25 rotatably housed within a body 57 joined to the second base 56 and slidingly engaged with the elongated body 21.

A second end 25b of the first shaft 25 is detachably associated, at least in rotation, to a first gear 4a of a bevel gear having normal axes. The bevel gear is supported by a slide 5 slidingly engaging the base 2.

Preferably, the second end 25b of the first shaft 25 has a polygonally facetted side wall to be accommodated in a complementarily polygonal seat formed in the first gear 4a.

A preferably adjustable and interchangeable stop element 6 is associated with the base 2 in order to adjust the stroke of the slide 5.

A second gear 4b of the bevel gear pair is bound to a second shaft 7, at least in a rotational manner. Two second pinions 8a, 8b are also bound to the ends of the second shaft 7, at least in a rotational manner.

The second pinions 8a, 8b respectively engage two second racks 9a, 9b arranged on opposite sides of the base 2.

The second shaft 7 is rotatable by means of a handwheel 10. The handwheel 10 is removably attached to the second shaft 7, preferably through the interposition of adjustable braking means, not visible in the drawings.

For example, the adjustable braking means may be an annular spacer made of a rigid material, preferably metal, fitted on the second shaft 7 and interposed between a side wall of the slide 5 and the operating handwheel 10.

In this manner, by adjusting the axial compression exerted by the operating handwheel 10 on the annular spacer, it is possible to generate a braking torque capable of opposing the driving torque acting on the second shaft 7, and consequently slowing down and/or controlling the movement of the second clamp unit 50.

In addition to the alignment and fastening device 20, a moulded support 11 for the tubular elements 100, 200, with adjustable position and height, and four transport handles 12a, 12b, 12c and 12d, which facilitate the movement of the machine 1, are also mounted on the base 2.

The machine 1 further comprises a heating device 70, which, in a self-contained manner, comprises a heat plate 71 on which casting sleeves 72a, 72b are mounted to perform pocket polyfusion welding of tubular elements 100, 200.

Preferably, the heating device 70 is associated with a swinging arm 13, hinged to the base 2, so that it can be moved to a welding position in which it can be approached and engaged with the ends to be welded of the tubular elements 100, 200.

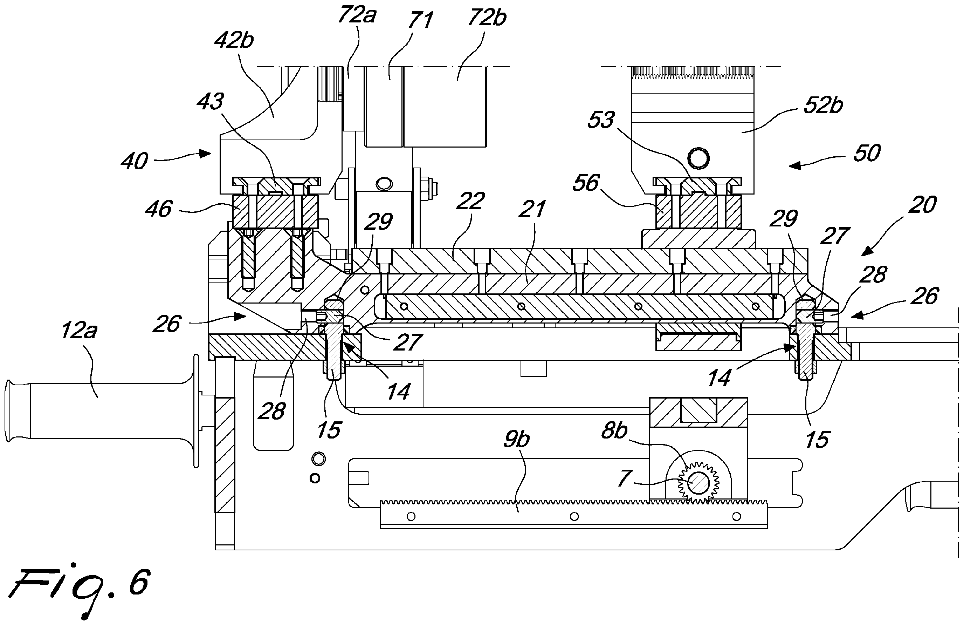

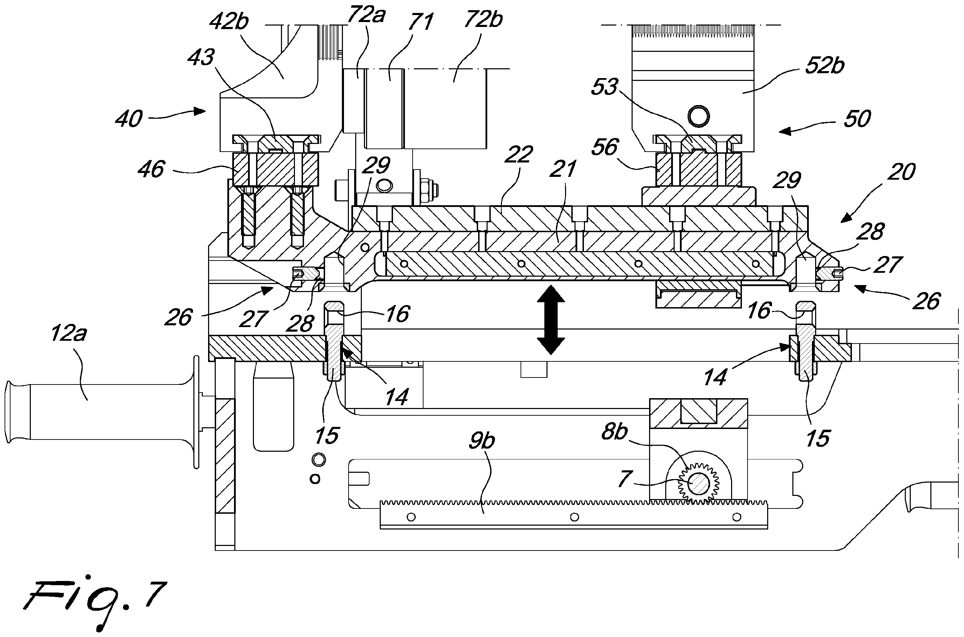

According to the present invention, the alignment and fastening device 20 is a stand-alone component and is mechanically connected/disconnected to/from the base 2, as shown in Figures 6 and 7.

The alignment and fastening device 20 is capable of switching from a first operational configuration, in which it is interconnected to machine 1, to a second operational configuration, in which it is used as a stand-alone device.

In this regard, first coupling members 26, two elements in the illustrated example, are arranged on the alignment and fastening device 20 in order to establish a mechanical connection with second coupling members 14 arranged at the base 2.

Each first coupling member 26 comprises a threaded grub screw 27, with a substantially pointed end, engaged in a respective threaded hole 28 formed in the elongated body 21 and facing a seat 29 for a corresponding second coupling member 14.

Each second coupling member 14 comprises a pin 15 which protrudes cantilevered from the base 2 in such a way as to fit into a corresponding seat 29.

Advantageously, the pin 15 has a self-centering hole 16, substantially shaped like a funnel, capable of interacting with and accommodating the substantially pointed end of the threaded pin 27.

It should be noted that, because of the conformation of the hole with self-centering shaping 16, screwing in threaded pin 27 results in its interference with the pin 15, and also achieves a self-centering of the alignment and fastening device 20 with respect to the base 2 during the transition from the second operating condition to the first operating condition.

When the alignment and fastening device 20 is detached from the basement 2 and is used independently, i.e. when it is in the second operating condition, a crank handle 30 is detachably attached to the second end 25b of the first shaft 25, which is integrally disengaged from the first gear 4a, at least in rotation, to move the second clamp unit 50.

Advantageously, friction means 31 are engaged to the first shaft 25, interposed between the crank 30 and the body 57 in order to slow and/or control the drag force of the second clamp unit 50, particularly when the elongated body 21 is in a substantially vertical position.

A handle 32 is detachably attached to the elongated body 21 and facilitates grip and handling of the alignment and fastening device 20 by a user of the same in the second operating condition.

The machine according to the present invention substantially operates as follows.

When bench welding of pipes and fittings is required, e.g. to make prefabricated joints, the alignment and fastening device 20 is in its first operating configuration, i.e. it is mechanically connected to the base 2 by means of the first and second couplers 26, 14.

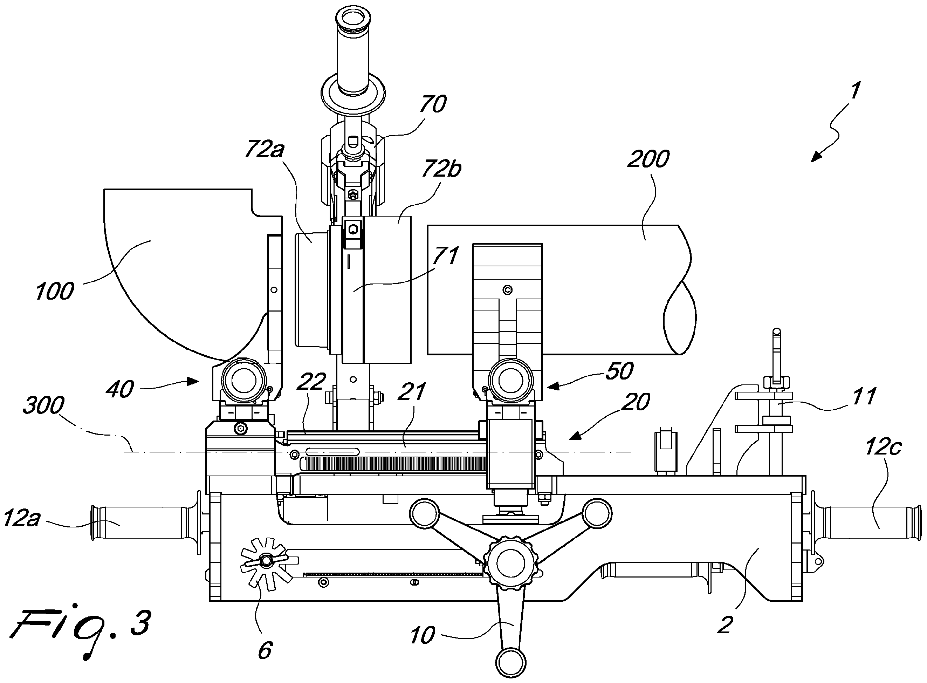

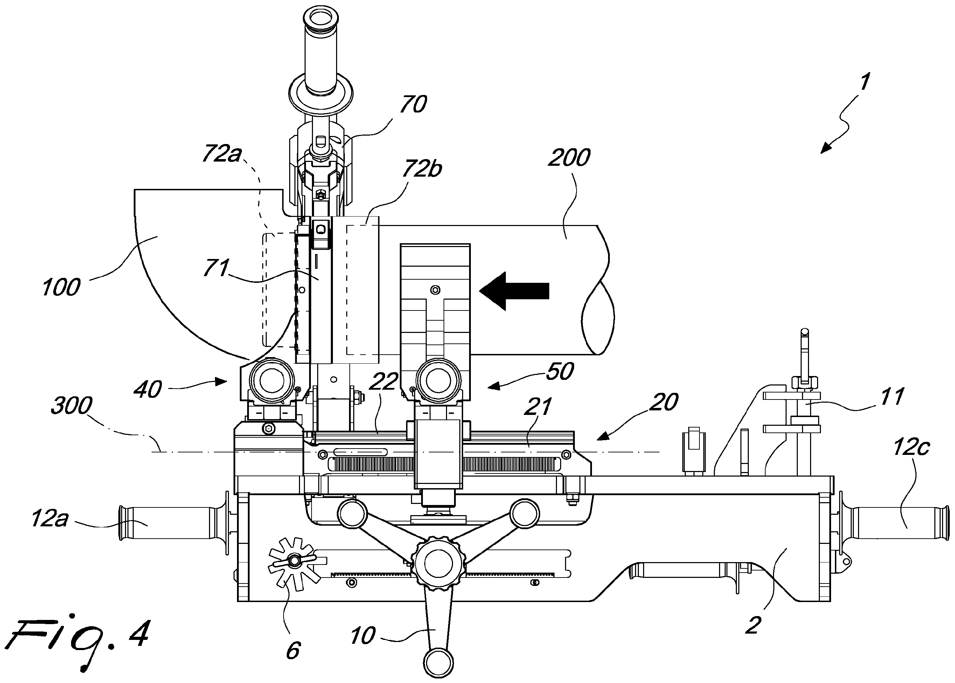

In this operational configuration, the welding operations, shown in Figures 3 and 4, begin by fastening one of the two tubular elements 100, 200 between the jaws 42a, 42b of the first clamp unit 40, and possibly also between the jaws 62a, 62b of the auxiliary clamp unit 60, and the other of the two tubular elements 100, 200 between the jaws 52a, 52b of the second clamp unit 50, and eventually resting it on the shaped support 11.

After the ends to be welded of the two tubular elements 100, 200 have been properly prepared and the heating device 70 has been brought to the correct temperature, the heating device 70 is moved to the welding position by acting on the swing arm 13, a position in which the casting sleeves 72a, 72b can be brought together and engaged with the ends to be welded of the tubular elements 100, 200.

At this point, acting on the operating handwheel 10, it is possible to move the second clamp unit 50, sliding it towards the first clamp unit 40 until the ends of the two tubular elements 100, 200 are coupled and engaged to the casting sleeves 72a, 72b.

After the heating time has elapsed, the two tubular elements 100, 200 are pulled apart and the heating device 70 is removed, after which the two tubular elements 100, 200 are brought back together and engaged immediately, progressively increasing the welding pressure by turning the handwheel 10 until the slide 5 comes into contact with the stop element 6.

In this operating configuration, the adjustable braking means associated with the operating handwheel 10 make it possible to counteract, without excessive muscular action on the part of a user, the force generated by the expansion of the two tubular elements 100, 200, as a result of their thermal expansion.

Using the adjustable braking means, it is in fact possible to generate a braking torque to oppose the driving torque acting on the second shaft 7, and consequently slow down and/or control the movement of the second clamp unit 50.

Once the welding phase is complete, the contact pressure is cancelled and the two tubular elements 100, 200 can be removed from machine 1.

When an on-site welding of pipes and fittings is required, e.g. to connect previously pre-fabricated joints, the alignment and fastening device 20 is brought into its second operating configuration, i.e. it is mechanically disconnected from base 2 to be used as a self-contained, independent structural unit.

In practice, unscrewing the threaded bolts 27 causes them to disengage from their respective pins 15, thus allowing the alignment and fastening device 20 to be detached from the base 2.

In this operating condition, as described above, the second end 25b of the first shaft 25 is engaged, with the interposition of the friction means 31, to the crank handle 30, which allows the second clamp unit 50 to be moved.

In addition, the handle 32 is attached to the elongated body 21 to facilitate grip and handling of the alignment and fastening device 20 by a user of the same.

In the second operating condition of the aligning and fastening device 20, the welding operations are substantially the same as those described for the first operating condition, but, in this case, the movement of the second clamp unit 50 is performed by acting on the crank handle 30, and the heating device 70 is manually gripped by the user.

In order to mount the alignment and fastening device 20 on the base 2, the steps described above in relation to its mechanical disconnection are carried out in reverse order.

In practice, it has been found that the invention achieves the intended aim and objects, providing a welding machine that satisfactorily combines the advantages of using a benchtop welder with the advantages of using a portable welder.

With the welding machine of the invention, it is in fact possible, using a single piece of equipment, to carry out both bench welding of pipes and fittings, as well as on-site welding of the same.

A further advantage of the welding machine according to the invention is that it enables the above-mentioned result to be achieved in a practical and relatively inexpensive manner.

Also, the welding machine according to the invention, due to its special design features, is able to ensure the broadest guarantees of reliability and safety in use.

The materials used, as well as the dimensions and shapes, may be any according to requirements and the state of the art.

## Claims

1. A welding machine, comprising a base (2) supporting an alignment and fastening device (20); said alignment and fastening device (20) comprising guiding means (21), a first clamp unit (40) and a second clamp unit (50), respectively engaging a first tubular element (100) and a second tubular element (200) to be joined by welding; at least one of said first clamp unit (40) and said second clamp unit (50) being movable with respect to each other, from a distant position to a close welding position; said base (2) being associated with a heating device (70) for welding said first and second tubular elements (100, 200); said welding machine being **characterized in that** said aligning and fastening device (20) is an autonomous component and is mechanically connected and disconnected to/from said base (2); said aligning and fastening device (20) being switched from a first operational configuration, in which said aligning and fastening device (20) is interconnected to said welding machine, to a second operational configuration, in which said aligning and fastening device (20) is used as a stand-alone device.

2. The welding machine, according to claim 1, **characterized in that** it comprises first coupling members (26) arranged in correspondence with said aligning and fastening device (20), said first coupling members (26) being adapted to establish a mechanical connection with second coupling members (14) arranged in correspondence with said base (2).

3. The welding machine, according to one or more of the preceding claims, **characterized in that** each first coupling member (26) comprises a threaded grub screw (27), having a substantially pointed end; said threaded grub screw (27) being engaged in a respective threaded hole (28) formed in said aligning and fastening device (20); said threaded hole (28) facing a seat (29) for a corresponding second coupling member (14).

4. The welding machine, according to one or more of the preceding claims, **characterized in that** each second coupling member (14) comprises a pin (15) protruding cantilevered from said base (2) and fitting into a corresponding seat (29); said pin (15) having a self-centering shaped hole (16) substantially shaped as a funnel and interacting with said substantially pointed end of said threaded pin (27), and to receive said threaded pin (27).

5. The welding machine, according to one or more of the preceding claims, **characterized in that** said guiding means comprises an elongated body (21) supporting said first and second clamp units (40, 50); said first clamp unit (40) being engaged to one end of said elongated body (21); said second clamp unit (50) being slidably engaged to said elongated body (21) and being movable with respect to said first clamp unit (40).

6. The welding machine according to one or more of the preceding claims, **characterized in that** it comprises handling means (23) of said second clamp unit (50).

7. The welding machine, according to one or more of the preceding claims, **characterized in that** said handling means comprises a first pinion (23) housed within said second clamp unit (50); said first pinion (23) engaging a first rack (24) mechanically associated with said elongated body (21) and being integrally engaged, at least in rotation, to a first end (25a) of a first shaft (25).

8. The welding machine, according to one or more of the preceding claims, **characterized in that** said handling means comprises a crank (30) removably associated, at least in rotation, to a second end (25b) of said first shaft (25).

9. The welding machine, according to one or more of the preceding claims, **characterized in that** said handling means comprises friction means (31) engaged to said first shaft (25).

10. The welding machine, according to one or more of the preceding claims, **characterized in that** said handling means comprises a bevel gear, with normal axes, supported by a slide (5) slidingly engaged to said base (2); a first gear (4a) of said bevel gear being removably engaged, at least in rotation, to said second end (25b) of said first shaft (25); a second gear (4b) of said bevel gear being engaged, at least in rotation, to a second shaft (7); at least a second pinion (8a, 8b), engaged with at least a second rack (9a, 9b) associated with said base (2), being integrally engaged to said second shaft (7), at least in rotation.

11. The welding machine, according to one or more of the preceding claims, **characterized in that** said handling means comprises a handwheel (10) removably attached, at least in rotation, to a first end of said second shaft (7), with the interposition of adjustable braking means.

12. The welding machine, according to one or more of the preceding claims, **characterized in that** it comprises at least one handle (32) detachably associated with said aligning and fastening device (20).

13. The welding machine, according to one or more of the preceding claims, **characterized in that** it comprises an auxiliary clamp unit (60), detachably associated with said base (2).

14. The welding machine, according to one or more of the preceding claims, **characterized in that** said first and second clamp units (49, 50) and said auxiliary clamp unit (60) comprise respective pairs of opposing jaws (42a, 42b, 52a, 52b, 62a, 62b), movable transversely to said elongated body upon actuation of relative control means (44); said pairs of jaws (42a, 42b, 52a, 52b, 62a, 62b) being interchangeable and reversible.

15. The welding machine, according to one or more of the preceding claims, **characterized in that** it comprises a swing arm (13) having an end hinged to said base (2); another end of said oscillating arm being associated with said heating device (70); said heating device (70) being movable to a welding position, wherein said heating device (70) is coupled to and engages the ends to be welded of said first and second tubular elements (100, 200).
